**Europäisches Patentamt**

**European Patent Office**

**Office européen des brevets**

(11) Veröffentlichungsnummer: **0 207 521**
**B1**

(12) **EUROPÄISCHE PATENTSCHRIFT**

(45) Veröffentlichungstag der Patentschrift:
27.09.89

(51) Int. Cl.⁴: **F 41 G 5/08**, G 01 S 7/46

(21) Anmeldenummer: 86109113.0

(22) Anmeldetag: 03.07.86

(54) **Zielvermessungssystem.**

(30) Priorität: 04.07.85 CH 2874/85

(43) Veröffentlichungstag der Anmeldung:
07.01.87 Patentblatt 87/2

(45) Bekanntmachung des Hinweises auf die Patenterteilung:
27.09.89 Patentblatt 89/39

(84) Benannte Vertragsstaaten:
CH DE FR GB IT LI NL SE

(56) Entgegenhaltungen:
WO-A-81/00149
CH-B- 415 135
DE-B- 1 165 459
DE-B- 1 205 868
US-A- 3 766 826
US-A- 3 845 276
US-A- 4 004 729
US-A- 4 302 666
US-A- 4 320 287

THE TRANSACTIONS OF THE IECE OF JAPAN, Band E 63, Nr. 6, Sektion E, Juni 1980, Seiten 498-499, Tokyo, JP; M. SHIBATA et al.: "Improvement of the tracking accuracies of airborne tracking radar using Kalman filter"

(73) Patentinhaber: **CONTRAVES AG,**
**Schaffhauserstrasse 580, CH-8052 Zürich (CH)**

(72) Erfinder: **Piccolruaz, Heinz,**
**Loowiesenstrasse 63 Sonnhalde Adlikon,**
**CH-8106 Regensdorf 2 (CH)**

(74) Vertreter: **Althoff, Gerhard et al, Patentanwälte H. Mitscherlich, K. Gunschmann Dr.W. Körber, J.Schmidt-Evers, W. Melzer Steinsdorfstrasse 10, D-8000 München 22 (DE)**

## Beschreibung

Die Erfindung liegt auf dem Gebiet der Zielvermessung und betrifft ein Verfahren und eine Vorrichtung zur räumlich-zeitlichen Bahnbestimmung von Objekten, insbesondere von bewegten Zielobjekten, gemäss Oberbegriff des Verfahrensanspruchs 1 und des Vorrichtungsanspruchs 6.

Zielverfolgungssysteme werden vor allem zur Vermessung der Flugbahnen von zivilen und militärischen Flugobjekten benötigt. Die verfolgten, d.h. in ständiger Bewegung befindlichen, zu vermessenden Objekte, also die Zielobjekte, können sich auf der Erdoberfläche, in beliebiger Höhe darüber, in Meeren und Seen, auch unterhalb der Wasseroberfläche oder aber im Weltraum bewegen. Die für die Zielwahrnehmung und Zielvermessung verwendeten Sensoren arbeiten in der Regel mit elektromagnetischen Wellen mit Wellenlängen zwischen $10^{-7}$ und $10^{-1}$ m. Unter Wasser werden hauptsächlich akustische Wellen verwendet.

In der Regel wird eine Raummessungsaufgabe im Sinne eines Polarkoordinatensystems in Distanzmessung und Winkelmessungen aufgeteilt. Distanzsensoren messen die Distanz zwischen Sensor und Zielobjekt und werten die Laufzeitdifferenz zwischen ausgesendeten und vom Zielobjekt rückreflektierten Wellenzügen (continuous), Wellenpaketen (pulsed) etc. aus. Da diese Sensoren den Informationsträger selber aussenden müssen, zählen sie zu den aktiven Sensoren. Winkelsensoren messen die winkelmässige Abweichung oder Ablage des Zielobjekts von einer gegebenen Visierlinie. Sie können passiv als reine Signal-Empfänger ausgestaltet sein und lediglich auf Signale von Fremdquellen ansprechen; im Prinzip auch auf diejenigen des aktiven Distanzsensors.

Zur Genauigkeit der Sensoren tragen u.a. vorrichtungsinhärente oder apparative Eigenschaften, zur Genauigkeit der Nachführung der Sensoren im Falle eines bewegten Zielobjekts funktionelle Eigenschaften bei. Die Ungenauigkeit dieser Nachführung wird oft auch Verfolgungsfehler genannt und beeinträchtigt die Genauigkeit der Sensoren, was wiederum den Verfolgungsfehler vergrössert usw.. Insbesondere bei Radarsensoren hat das Verhältnis der Wellenlänge zur Grösse der Antenne, mit welcher die Wellen empfangen oder ggf. ausgesendet und empfangen werden, grossen Einfluss auf die Genauigkeit der Winkelsensoren und auf die Richtwirkung aller Sensoren. Eine gute Richtwirkung wird benötigt, um die Energieabstrahlung der aktiven Sensoren möglichst klein zu halten, d.h. eine unnütz grosse Ausleuchtung zu vermeiden. Bei der Anwendung von längerwelliger Energie müssen verhältnismässig grosse, schwere Antennen dem Zielobjekt ebenso präzis nachgeführt werden können, wie es bei der Anwendung kürzerer Wellenlängen, d.h. bei leichteren Antennen ohnehin leichter realisierbar ist. Ungenauigkeiten in dieser masse- und dadurch trägheitsbehafteten Nachführung, auch Verfolgungsfehler genannt, beeinträchtigen wiederum direkt die Genauigkeit der betroffen, als interdependentes Subsystem mit eigener innerer Abhängigkeit aufzufassenden Sensoren, was wechselwirkend wiederum den Verfolgungsfehler vergrössert.

Um Ziele im Raum von einem beliebigen Raumpunkt aus zu vermessen und benachbarte Ziele oder ein Ziel und sein Spiegelbild klar auseinander halten zu können (Auflösung), ist es wichtig, die Sensorsignale dem entsprechenden Sensorservo derart verarbeitet zuzuführen, dass dieser die notwendigerweise gemeinsame Visierlinie möglichst genau auf das Ziel gerichtet hält.

Durch die Patentschrift CH-B-415 135 ist ein Verfahren und eine Schaltungsanordnung bekanntgeworden, das zur Verminderung der statistischen Schwankungen bei elektrischen Nachlaufsystemen und damit, bei entsprechender Anwendung, auch zur präziseren Nachführung einer Visierlinie auf ein angepeiltes Objekt beiträgt. Die Schaltungsanordnung arbeitet, wie im Oberbegriff der erfindungsgemässen Vorrichtung, mit zwei Winkelsensoren und zwei Distanzsensoren, wobei je ein Winkel- und ein Distanzsensor mittels Radargeräten realisiert sind. Die beiden Radargeräte arbeiten mit verschiedenen Wellenlängen und verwenden in einer Ausführungsform bspw. eine gemeinsame Antenne. Das Verfahren geht nun davon aus, dass bei zwei, es könnten auch mehr als zwei sein, statistischen oder stochastischen Fehlerschwankungen unterworfenen Systemen mit nicht zeitlich, sondern untereinander unkorreliertem Rauschen, die Auswertung der beiden gleichzeitigen Messungen (samples) ein besseres Signal-Rausch-Verhältnis erhalten wird, als bei der Messung durch nur ein System. Abgesehen vom apparativen Aufwand der zu einer nochmaligen Verbesserung des Signal-Rausch-Verhältnisses bei der konsequenten Anwendung dieser Lehre notwendig wäre, zeigt dieses Verfahren keinen Weg, wie weitere Informationen aus der Distanzmessung, über die Flugdynamik des Objekts und deren stochastische Veränderungen, sowie über die Dynamik des Servos und dessen stochastische Eigenschaften usf. zur Verbesserung des Verfolgungsverhaltens herangezogen werden können. Daraus lässt sich schliessen, dass die Varianz des Verfolgungsfehlers des angegebenen Systems nicht optimal klein sein kann.

Um also Ziele genau vermessen und benachbarte Ziele oder ein Ziel und sein Spiegelbild sauber auseinanderhalten zu können, ist es wichtig, dass die Signale der Sensoren so verarbeitet und dem Sensorservo zugeführt werden, dass dieser die gemeinsame Visierlinie der Sensoren möglichst genau auf das Zielobjekt gerichtet hält. Dies ist die Aufgabe der Erfindung.

Diese Aufgabe wird durch die in den Patentansprüchen 1 und 6 definierte Erfindung gelöst. Zweckmässige Weiterbildungen der Erfindung sind in den Unteransprüchen gekennzeichnet. Die Grundidee der Erfindung besteht darin, dass die Zielverfolgung in einem Zustands-Regelkreis erfolgt, so dass eine gute Voraussage über das wahrscheinliche Zielverhalten möglich wird.

Die Erfindung wird nun mit Hilfe der nachfolgend aufgeführten Figuren eingehend diskutiert.

Fig. 1 zeigt eine einfache Ausführungsform der Vorrichtung gemäss Erfindung;

Fig. 2 zeigt eine andere, erweiterte Ausführungsform der Vorrichtung gemäss Erfindung;

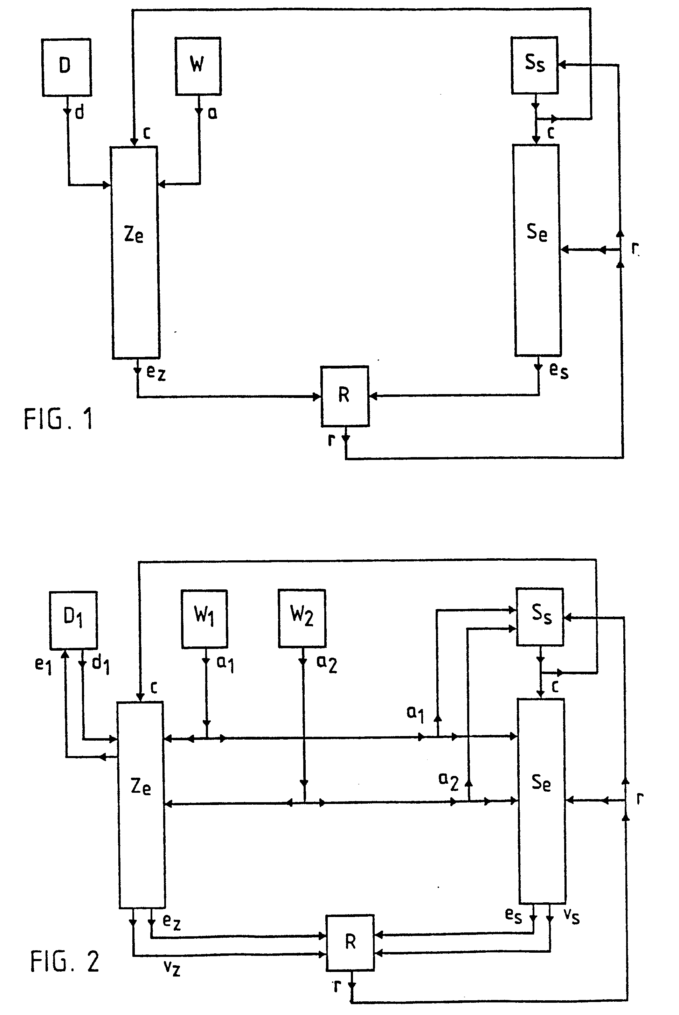

Die Grundzüge des Verfahrens werden nun anhand der einfachen Ausführungsform der Vorrichtung gemäss Figur 1 beschrieben. Diese Figur zeigt die Zusammenschaltung eines Distanzsensors D und eines Winkelsensors W mit einem Zielestimator Ze und eines Winkelsensorservos Ss mit einem Winkelsensorservoestimator Se und mit einm Zustandsregler R, der mit den Ausgangsgrössen ez ( = Schätzung des Ist-Bewegungszustandes des Zieles) und es [ = Schätzung des Ist-Bewegungszustandes des Servos (Ss)] der beiden Estimatoren Ze und Se beaufschlagt wird. Zum nachfolgend und in den Ansprüchen benutzten Begriffsmodell: Der Zielestimator Ze ist im wesentlichen als Modell der Zielbewegung und der Servoestimator Se ist als Modell der Servobewegung, d.h. Bewegung der Visierlinie, welche durch den Servo Ss bewirkt wird, zu verstehen. Zwischen dem Regler R und den Positionsmesswerten liefernden Distanz-Sensoren D, Winkelsensoren W (die Zielsensoren) und den Codern ( = Lagesensoren der Winkelsensorservos) ist also je eines dieser beiden Modelle zwischengeschaltet, die das Ziel bzw. den Sensorservo nachbildet (modelliert). Damit ist eine Voraussage, eine «gute» Schätzung möglich, wohin sich das angepeilte Ziel wahrscheinlich hinbewegen wird. Der Regler R wird der Systemqualität wegen vorzugsweise als nichtlinearer und adaptiver Zustandsregler ausgestaltet.

Die meisten Zielverfolgungssysteme benutzen als Winkelsensoren bspw. Radargeräte, TV-Geräte, IR-Geräte (FLIR), Laser-Geräte; als Distanzsensoren Radar- oder Lasergeräte. Dabei sind Radar und Laser verwendende Sensoren aktiv (Strahler), TV- und IR-Geräte reine Empfänger, also passiv. Bei Radar und Laser Anwendung ist oft ein Distanzsensor mit einem Winkelsensor eng kombiniert, bspw. dass sie gleiche Wellenlängen und eine gemeinsame Antenne benutzen, im gleichen Gehäuse untergebracht sind und schaltungstechnisch in der Lage sind, untereinander Signale auszutauschen.

Die von den Distanzsensoren D abgegebenen Signale d sind meistens skalare Grössen, die Signale a der Winkelsensoren vektorielle Grössen. Im Polarkoordinatensystem sind dies ein- (für Distanz) und zweiwertige (für Seiten- und Höhenwerte) Signale. Zusammen ergibt dies dann die nötigen Parameter zur Bestimmung eines beliebigen Punktes im dreidimensionalen Raum. Ist das Signal eines Winkelsensors zweiwertig, so können die beiden Werte unabhängig voneinander betrachtet werden, wenn die beiden Mess-Richtungen orthogonal zueinander stehen und z.B. die Ablage des Zielobjekts zur Visierlinie sich aus zwei Winkelmessungen, Azimut und Elevation, ergibt. Enthält das Winkelsensorsignal mehr als zwei Werte, so läuft dies auf ein Mehr-als-zwei-Achsen-Problem hinaus und die Werte sind als voneinander abhängig zu betrachten, wobei nur benachbarte Drehachsen einen festen Winkel bilden und jeder Position der Visierlinie, im Gegensatz zu den beiden einander orthogonal zugeordneten Achsen, unendlich viele Kombinationen von Positionen der Drehachsen entsprechen.

Für Zielvermessungsaufgaben ist eine Einrichtung mit einem Distanzsensor und einem orthogonalen Zweiachsenwinkelsensor für die Bewältigung der Polarkoordinaten-Messungsaufgabe in der Regel ausreichend, doch erlaubt das Verfahren gemäss Erfindung auch, Einrichtungen zu schaffen und zu betreiben, die beliebig viele Sensoren aufweisen.

In Figur 1 sind die obengenannten Subsysteme D, W, Ze, Ss, Se, R so geschaltet, dass der Regler R vom Zielestimator Ze die Schätzung ez des Bewegungszustandes des Zieles als Sollgrösse des Bewegungszustandes des Servos, d.h., wohin der Servo drehen soll, und vom Servoestimator Se eine Istgrösse es, also den tatsächlichen Bewegungszustand des Servos erhält. Dabei ist die damit verbundene Interdependenz zu beachten; der Winkelsensor W und sein Servo Ss sind mechanisch miteinander verbunden. Die Reglerausgangsgrösse r (Stellsignal), welche vektoriell ist, korrigiert im Winkelsensor-Servo die Ablage gegen kleinere Werte, gleichzeitig wird sie in das Modell der Servobewegung (Servoestimator Se) aufgenommen. Im Servoestimator Se werden also die Korrekturgrössen oder Stellwerte r für den Servo und die Positionsmessungen c des Servos verarbeitet. Die Positionsmessungen des physischen Servos Ss bzw. des Originals werden auch als Grösse c in das Zielmodell des Zielestimators Ze übertragen. Das Modell der Zielbewegung (Zielestimator Ze) verarbeitet die Positionsmessungen c des Servo-Originals, die aktuellen Winkelsensorvektoren a und die aktuellen Distanzsensorskalare d zu Schätzwerten ez.

Damit wird folgendes bewirkt:

Der den Winkelsensor-Servo Ss nachbildende Estimator Se erarbeitet für den Regler R eine Schätzung des Bewegungszustandes des Servos. Der Bewegungszustand enthält alle Informationen, um mit Hilfe der den Servo beschreibenden (vektoriellen) Differentialgleichung alle zukünftigen Bewegungszustände berechnen zu können, falls keine unerwarteten Störungen unbekannter Grösse — wie z.B. den Servo beeinflussende Windkräfte an der Antenne — auftreten. Das ebenfalls den Servo beeinflussende Stellsignal r dagegen ist keine unerwartete Störung unbekannter Grösse, sondern eine determinierte Grösse, deren Einfluss bei der Integration der Differentialgleichung genau berücksichtigt werden kann und soll.

Der Bewegungszustand es des Servos kann Position, Geschwindigkeit, Beschleunigung etc. aller Antriebsmittel bzw. Drehachsen des beteiligten Subsystems darstellen und ermöglicht somit auch die Bestimmung von unbekannten Parametern als weitere Charakteristiken der Grundgesamtheit des Systems, also z.B. eine Schätzung des Codersignals c. Mit relativ wenigen empirisch erfahrbaren Grössen (Messungen) können die «wahren» Systemgrössen und Zusammenhänge geschätzt werden. Das Codersignal c kann nur dann dauernd mit seiner Schätzung aus es übereinstimmen, wenn die den Bewegungszustand darstellende Grösse es des Modells vollständig mit jenem des Originals, das ist der Winkelsensorservo Ss, übereinstimmt. Dies ist gegeben, wenn der Schätzfehler es* der Schätzung des Bewegungszustandes es verschwindet. Allfällige Abweichungen des Werts des Codersignals c werden verwendet, um die Schätzfehler es* zu korrigieren, d.h. um die Abbildung des Originals zu verbessern.

Die Theorie des Extended-Kalman-Bucy-Filters beschreibt, wie man diese Korrektur gestalten muss, damit die Varianz $Vs = E[(es*)'.es*]$ des Schätzfehlers $es*$ minimal und somit der Servoestimator Se optimal wird. Dies unter Berücksichtigung von stochastischen Einflüssen wie Messfehler des Codersignals c, Windkräfte an der Antenne usw.. Der Operator E in der Varianz steht für die Erwartungswertbildung und der Operator ' (von $es*$') steht für die Transposition von Vektoren bzw. Matrizen. Die Varianz ist in diesem Falle eine Matrix (oder Tensor 2ter Ordnung). Die systemimmanente Kopplung der Elemente des Schätzfehlervektors $es*$ bewirkt, dass kein Diagonal-Element der Varianzmatrix Vs minimal sein kann, ohne dass es alle anderen auch sind.

So wie der Servoestimator Se den Bewegungszustand es des Servos Ss schätzt, so schätzt der Zielestimator Ze den Bewegungszustand ez des Zielobjekts. Als Beobachtung verwendet der Zielestimator Ze aber nicht das Codersignal c allein, sondern das Codersignal c kombiniert mit dem Winkelsensorsignal a des Winkelsensors W und ergänzt durch das Signal d des Distanzsensors.

Auch der Zielestimator Ze ist somit ein Modell, nämlich die Abbildung der Bewegung des Zieles, und das Zielestimatorausgangssignal ez ist eine Schätzung des Winkel-Bewegungszustands des Zielobjekts, also seiner räumlichen Position, Geschwindigkeit, Beschleunigung etc.. Auch die Schätzung ez hat einen Fehler $ez*$ und dieser eine Varianz $Vz = E(ez*'.ez*)$, wie die Theorie des Extended-Kalman-Bucy-Filters beschreibt, und das Modell lässt sich durch Korrektur ebenso dem Original annähern, wie dies oben, im Zusammenhang mit dem Servoestimator schon beschrieben wurde. Beide Modelle bzw. Estimatoren sind durch Extended-Kalmanfilter bzw. Extended-Bucyfilter darstellbar. Das zeitdiskrete Extended-Kalmanfilter kann mit Digitalrechnern, das zeitkontinuierliche Extended-Bucyfilter mit Analogrechnern realisiert werden.

Figur 2 zeigt nun eine erweiterte Ausführungsform mit zwei Winkelsensoren W1 und W2. Wie bei der schon erwähnten Patentschrift CH-B-415 135 werden zwei Winkelsensoren W1, W2 verwendet, wobei die Winkelsensoren durch Radargeräte gebildet werden können. Ferner wird ein Distanzsensor D1 verwendet, der auch ein Radargerät sein kann. Die beiden Radargeräte der Winkelsensoren W1, W2 verwenden in dieser Ausführungsform verschiedene Wellenlängen. Durch den Winkelsensorservo Ss werden die zueinander parallelen Visierlinien zur dauernden Ausrichtung auf ein Zielobjekt gebracht, wobei diese Sensoren W1, W2, D1 kein Sensorsignal abgeben, wenn sie das Ziel nicht sehen — d.h. kein Zielecho empfangen — können.

Die Winkelsensorsignale a1, a2 werden beiden Estimatoren Ze und Se, sowie dem Winkelsensorservo zugeführt. Bei dieser Massnahme werden nun auch im Modell des Winkelsensorservos bzw. im Servoestimator Se die Winkelsensorsignale a1, a2 nebst den Positionsmessungen c des Servo-Originals berücksichtigt. Sind die Estimatoren Ze und Se, wie hier vorgeschlagen wird, Extended-Kalman-Bucy-Filter, so liefern sie neben den Zustandsschätzungen ez und es, also der Schätzung des Winkelbewegungszustandes des Zielobjekts und der Schätzung des Bewegungszustandes des Servos, auch noch die Varianzen Vz und Vs der entsprechenden Schätzfehler. So werden in der Ausführungsform gemäss Figur 2 dem Regler R auch die Schätzfehlervarianzen Vz und Vs zugeführt. Aus der Schätzfehler-Varianz können Aussagen über das System gemacht werden; so ist die Varianz des Verfolgungsfehlers ein direktes Mass für die Systemgüte.

Ferner werden in dieser Ausführungsform die vom Zielestimator Ze zur Verfügung gestellten Schätzungen e1 des Distanzbewegungszustandes des Zielobjekts dem Distanzsensor D1 zugeführt, um damit eine Zeittorschaltung nachzuführen.

Dieses System funktioniert wie folgt;

Der Servo Ss wird dauernd durch die Ablagesignale a1, a2 gesteuert. Wie dabei diese Signale gewichtet werden, spielt (abgesehen von Laufzeiteffekten bzw. Totzeiteffekten) keine Rolle, weil der Servoestimator Se von den gleichen Signalen in gleicher Weise gesteuert wird. Der Servoestimator Se berechnet aus den Positionsmessungen c und aus den Fehlersignalen a1, a2 eine Schätzung es des vollständigen Bewegungszustandes des Servos Ss, d.h. Position, Geschwindigkeit, Beschleunigung usw. in Seite und Höhe. Gleichzeitig berechnet der Zielestimator Ze aus den Werten der Signale d1, c, a1, a2 eine Schätzung ez des vollständigen Winkelbewegungszustandes des Zielobjekts, also jener Position, Geschwindigkeit, Beschleunigung usw. in Seite und Höhe, welche der Servo Ss haben sollte, damit die Sensoren W1 und W2 auf das Zielobjekt gerichtet sind und bleiben.

Die Ablagesignale a1 und a2 sind für den Zielestimator Ze fehlerbehaftete Messwerte der Position des Zieles, für den Servoestimator Se hingegen fehlerfrei bekannte Steuersignale des Servos Ss.

Nun berechnet der Zustandsregler R sein Stellsignal r dergestalt, dass die Schätzung es des IST-Bewegungszustands des Servos Ss möglichst rasch und genau übergeht in die Schätzung ez des IST-Bewegungszustands des Zieles, d.h. des SOLL-Bewegungszustands des Servos Ss. Da r nicht nur den Servoestimator Se regelt, sondern auch den Servo Ss, und weil Ss und Se auf a1, a2 und r gleich reagieren, setzt sich der Folgefehler von Ss zusammen aus der SOLL-IST-Differenz ez-es, sowie den Fehlern der Schätzungen ez und es. Dieser Folgefehler, von dem letztlich nur die Positions-Komponente interessiert, wird verursacht durch Ungenauigkeiten (Messrauschen, Spiegeleffekt usw.) der Signale d1, a1, a2 und c, sowie durch unerwartete Bewegungen des Ziels, und wird verschlimmert durch Totzeiteffekte infolge Laufzeit auf dem Signalweg W1&W2 --> Ze&Se --> R&Ss.

Die Varianz dieses Folgefehlers wird minimal, wenn man die Estimatoren Ze und Se in bekannter Weise als Optimalfilter gestaltet, und auch beim Regler R die bekannten Methoden der optimalen Zustandsregelung anwendet. Insbesondere kann der Zielestimator Ze als Extended-Kalman-Bucy-Filter ohne weiteres die Ablagesignale a1 und a2, sowie beliebig viele zusätzliche Signale von weiteren Sensoren parallel verarbeiten und damit ihren Informationsgehalt voll ausschöpfen. Dabei kann man wahlweise diese zusätzlichen Sensorsignale nur in den Zielestimator Ze einführen wie in Figur 1 oder auch, wie hier in Fig. 2 schon an zwei Sensoren dargestellt, auch in den Servoestimator Se und den Sensorservo Ss. Die Verwertung von Informationen über die Messfehlervarianz z.B. von a1 und a2, bspw. die AGC-Spannungen (automatic gain control) von W1 und W2, ist dabei nützlich, aber nicht notwendig.

Sind die Estimatoren Ze und Se Extended-Kalman-Bucy-Filter, so liefern sie neben den Schätzungen ez und es, wie gesagt, auch noch die Varianzen der entsprechenden Schätzfehler. Werden diese Varianzen Vz und Vs, wie in der Ausführungsform gemäss Figur 2 gezeigt, ebenfalls dem Zustandsregler R zugeführt, so kann dieser einen optimalen Kompromiss zwischen Folgefehler und Servobelastung finden, und zwar besonders einfach, wenn die entsprechenden Zielfunktionen quadratisch definiert sind.

## Patentansprüche

1. Verfahren zum Nachführen eines gegebenen Visierindikators an einem sich im Raum bewegenden Ziel mit einem Zielverfolgungssystem, das mindestens einen Distanzsensor (D) und mindestens einen Winkelsensor (W) und einen mindestens zwei Drehachsen aufweisenden und mit Stellsignalen beaufschlagten Winkelsensor-Servo (Ss) aufweist zur dauernden Ausrichtung der zu einer gemeinsamen Visierlinie parallel gerichteten Visierlinien der Sensoren auf das Ziel, dadurch gekennzeichnet, dass die Ausgangssignale des Winkelsensor-Servos (Ss) bilden den Codersignale (c) und die Stellsignale (r) für den Winkelsensor-Servo (Ss) in einem ersten, die Winkel-Sensorservo-Bewegung abbildenden Modell (Se) zu ersten Schätzwerten (es) verarbeitet werden, und dass die Distanzsignale (d) des Distanzsensors und die Winkelsignale (a) des Winkelsensors mit den Codersignalen (c) des Winkelsensor-Servos (Ss) in einem anderen, die Zielobjekt-Bewegung abbildenden Modell (Ze) zu zweiten Schätzwerten (ez) verarbeitet werden und dass die ersten und zweiten Schätzwerte (es, ez) in einem Regler (R) zu Stellsignalen (r) für den Winkelsensor-Servo verarbeitet werden.

2. Verfahren nach Anspruch 1, dadurch gekennzeichnet, dass ein Zielestimator (Ze), ein Servoestimator (Se) und ein Zustandsregler (R) die Winkelsensorsignale und die Distanzsensorsignale und die Winkelsensorservosignale zu Stellsignal (r) verarbeiten, um damit den Winkelsensorservo (Ss) und den Servoestimator (Se) gleicherweise zu steuern, dass im Servoestimator (Se) aus dem Codersignal des Winkelsensor-Servos (Ss) eine Schätzung dessen Bewegungszustandes, der den Bewegungszustand der gemeinsamen Visierlinie der Sensoren darstellt, erzeugt wird, dass im Zielestimator (Ze) aus dem Codersignal und den Winkelsensorsignalen und den Distanzsensorsignalen eine Schätzung des Winkelbewegungszustandes des Zieles erzeugt wird und dass im Zustandsregler (R) das Regelsignal so erzeugt wird, dass die beiden Zustandsschätzungen möglichst genau gleich sind und bleiben.

3. Verfahren nach Anspruch 1 oder 2, dadurch gekennzeichnet, dass aus dem Zielestimator (Ze) Schätzungen des Distanz-Bewegungszustandes des Ziels den Distanzsensoren (D) zugeführt werden.

4. Verfahren nach einem der Ansprüche 1, 2 oder 3, dadurch gekennzeichnet, dass im Zielestimator (Ze) und im Servoestimator (Se) Schätzfehlervarianzen (Vz, Vs) gebildet werden und diese dem Zustandsregler (R) zugeführt werden.

5. Verfahren nach einem der Ansprüche 1, 2, 3 oder 4, dadurch gekennzeichnet, dass die Winkelsensorsignale nicht nur dem Zielestimator (Ze) sondern auch sowohl dem Servoestimator (Se) als auch dem Winkelsensor-Servo (Ss) zugeführt werden.

6. Vorrichtung zur Durchführung des Verfahrens nach Anspruch 1, mit mindestens einem Distanzsensor (D) und mindestens einem Winkelsensor (W) und einem mindestens zwei Drehachsen aufweisenden Winkelsensor-Servo (Ss) zur dauernden Ausrichtung der zu einer gemeinsamen Visierlinie parallelgerichteten Visierlinien der Sensoren (D, W) auf das Ziel, dadurch gekennzeichnet, dass der Winkelsensor-Servo (Ss) mit einem Servoestimatornetzwerk (Se) verbunden ist, dessen Ausgang (es) mit dem einen Eingang eines Regelnetzwerks (R) verbunden ist, dass der oder die Distanzsensor/en (D) und der oder die Winkelsensor/en (W) und der Winkelsensor-Servo (Ss) mit einem Zielestimatornetzwerk (Ze) verbunden sind, dessen Ausgang (ez) mit dem anderen Eingang des Regelnetzwerks (R) verbunden ist, und dass der Ausgang des Regelnetzwerks (R) mit einem Reglereingang des Winkelsensor-Servos (Ss) und einem Eingang des Servoestimatornetzwerks (Se) verbunden ist.

7. Vorrichtung nach Anspruch 6, dadurch gekennzeichnet, dass ein Zielestimator (Ze) und ein Servoestimator (Se) und ein Zustandsregler (R) vorgesehen sind, welche die Signale (a1, a2, d1, c) der Winkelsensoren (W1, W2), des Distanzsensors (D1) und des Winkelsensorservos (Ss) zu einem Stellsignal (r) verarbeiten, dass am Winkelsensorservo (Ss) und am Servoestimator (Ss) Eingänge vorgesehen sind zur Einführung von Signalen mit Werten des Stellsignals (r), dass der Ausgang des Winkelsensor-Servos (Ss) auf einen Eingang des Servoestimators (Se) geführt ist zur Übertragung des Codersignals (c), dass Mittel vorgesehen sind zur Übertragung der Winkelsensorsignale (a1, a2), der Distanzsignale (d1) und des Codersignals (c) auf den Zielestimator (Ze) und dass die Ausgänge beider Estimatoren (Ze, Se) auf die Eingänge des Zustandsreglers (R) geführt sind, um Signale mit Werten der Zustandsschätzungen (ez, es) in Stellsignal (r) zu überführen.

8. Vorrichtung nach Anspruch 6 oder 7, dadurch gekennzeichnet, dass der Zielestimator (Ze) zur Übertragung von Signalen mit Werten der Schätzungen (e1) des Distanzbewegungszustands des Ziels mit einem Distanzsensor (D1) verbunden ist.

9. Vorrichtung nach einem der Ansprüche 6, 7 oder 8, dadurch gekennzeichnet, dass Mittel vorgesehen sind zur Übertragung von Signalen mit Werten der Schätzfehlervarianzen (Vz, Vs) vom Zustandsestimator (Ze) und vom Servoestimator (Se) zum Zustandsregler (R).

10. Vorrichtung nach einem der Ansprüche 6, 7, 8 oder 9, dadurch gekennzeichnet, dass Winkelsensoren (W1, W2) auch mit dem Servoestimator (Se) und dem Winkelsensor-Servo (Ss) verbunden sind, um die Winkelsensorsignale (a1, a2) zu übertragen.

11. Vorrichtung nach einem der Ansprüche 6 bis 10, dadurch gekennzeichnet, dass die Estimatoren (Ze, Se) Extended-Kalman-Bucy-Filter sind.

12. Vorrichtung nach Anspruch 6 bis 10, dadurch gekennzeichnet, dass die Estimatoren (Ze, Se) Extended-Kalman-Filter sind.

13. Vorrichtung nach Anspruch 6 bis 10, dadurch gekennzeichnet, dass die Estimatoren (Ze, Se) Extended-Bucy-Filter sind.

## Claims

1. Method for updating a given sighting indicator on a target moving in space, with a target tracking system having at least one distance sensor (D) and at least one angle sensor (W) and an angle sensor servo (Ss) which has at least two rotation axes and to which actuating signals are applied for constantly aligning onto the target the lines of sight of the sensors, directed in parallel to constitute a common line of sight, characterised in that the coder signals (c) mapping the output signals of the angle sensor servo (Ss), and the actuating signals (r) for the angle sensor servo (Ss), are processed into first estimates (es) in a first model (Se) mapping the angle sensor servo movement, and that the distance signals (d) of the distance sensor and the angle signals (a) of the angle sensor are processed, with the coder signals (c) of the angle sensor servo (Ss), into second estimates (ez) in another model (Ze) mapping the movement of the target object, and that the first and second estimates (es, ez) are processed in a controller (R) into actuating signals (r) for the angle sensor servo.

2. Method according to claim 1, characterised in that a target estimator (Ze), a servo estimator (Se) and a status controller (R) process the angle sensor signals and distance sensor signals and the angle sensor servo signals into an actuating signal (r), in order thereby to control the angle sensor servo (Ss) and the servo estimator (Se) equally, that in the servo estimator (Se) the coder signal of the angle sensor servo (Ss) is used to produce an estimate of the kinetic status thereof which represents the kinetic status of the common line of sight of the sensors, that in the target estimator (Ze) the coder signal and the angle sensor signals and distance sensor signals are used to produce an estimate of the angle movement status of the target, and that in the status controller (R) the control signal is so generated that the two status estimates are, and remain, identical as far as possible.

3. Method according to claim 1 or 2, characterised in that from the target estimator (Ze) estimates of the distance movement status of the target are supplied to the distance sensors (D).

4. Method according to one of claims 1, 2 or 3, characterised in that in the target estimator (Ze) and in the servo estimator (Se) forecast error variances (Vz, Vs) are formed and these are supplied to the status controller (R).

5. Method according to one of claims 1, 2, 3 or 4, characterised in that the angle sensor signals are supplied not only to the target estimator (Ze) but also both to the servo estimator (Se) and to the angle sensor servo (Ss).

6. Apparatus for carrying out the method according to claim 1, having at least one distance sensor (D) and at least one angle sensor (W) and an angle sensor servo (Ss) with at least two rotation axes for constantly aligning onto the target the lines of sight of the sensors (D, W), directed in parallel to form a common line of sight, characterised in that the angle sensor servo (Ss) is linked to a servo estimator network (Se) whose output (es) is linked to one input of a control network (R), that the distance sensors (D) and the angle sensor or sensors (W) and the angle sensor servo (Ss) are linked to a target estimator network (Ze) whose output (ez) is linked to the other input of the control network (R), and that the output of the control network (R) is linked to a control input of the angle sensor servo (Ss) and to an input of the servo estimator network (Se).

7. Apparatus according to claim 6, characterised in that a target estimator (Ze) and a servo estimator (Se) and a status controller (R) are provided which process the signals (a1, a2, d1, c) of the angle sensors (W1, W2), of the distance sensor (D1) and of the angle sensor servo (Ss) into an actuating signal (r), that on the angle sensor servo (Ss) and on the servo estimator (Ss) inputs are provided for introducing signals with values of the actuating signal (r), that the output of the angle sensor servo (Ss) leads to an input of the servo estimator (Se) for communicating the coder signal (c), that means are provided for communicating the angle sensor signals (a1, a2), the distance signals (d1) and the coder signal (c) to the target estimator (Ze), and that the outputs of both estimators (Ze, Se) lead to the inputs of the status controller (R), in order to convert signals with values of the status estimates (ez, es) into actuating signal (r).

8. Apparatus according to claim 6 or 7, characterised in that the target estimator (Ze) is linked to a distance sensor (D1) for communicating signals with values of the estimates (e1) of the distance movement status of the target.

9. Apparatus according to one of claims 6, 7 or 8, characterised in that means are provided for communicating signals with values of the forecast error variances (Vz, Vs) from the status estimator (Ze) and from the servo estimator (Se) to the status controller (R).

10. Apparatus according to one of claims 6, 7, 8 or 9, characterised in that angle sensors (W1, W2) are also linked to the servo estimator (Se) and the angle sensor servo (Ss), in order to communicate the angle sensor signals (a1, a2).

11. Apparatus according to one of claims 6 to 10, characterised in that the estimators (Ze, Se) are extended Kalman-Bucy filters.

12. Apparatus according to claims 6 to 10, characterised in that the estimators (Ze, Se) are extended Kalman filters.

13. Apparatus according to claims 6 to 10, characterised in that the estimators (Ze, Se) are extended Bucy filters.

## Revendications

1. Procédé de poursuite d'un indicateur de visée, déterminé, sur une cible se déplaçant dans l'espace à l'aide d'un système de poursuite de cible comprenant au moins un capteur de distance (D) et au moins un capteur d'angle (W) ainsi qu'au moins un asservissement de capteur d'angle (Ss) à au moins deux axes de rotation et recevant des signaux de positionnement pour l'alignement permanent des lignes de visée parallèles à la ligne de visée commune des capteurs sur la cible, procédé caractérisé en ce que les signaux de sortie de l'asservissement de capteur d'angle (Ss) formant le signal de codeur (c) et les signaux de réglage (r) de l'asservissement de capteur d'angle (Ss) sont traités dans un premier modèle (Se) simulant le mouvement angulaire de l'asservissement de capteur pour donner une première évaluation (es) et en ce que les signaux de distance (d) du capteur de distance et des signaux d'angle (a) du capteur d'angle sont traités avec le signal de codeur (c) de l'asservissement de capteur d'angle (Ss) en un autre modèle (Ze) copiant le mouvement de la cible pour des secondes évaluations (ez) et en ce que les première et seconde évaluations (es, ez) sont traitées dans un régulateur (R) por donner les signaux de positionnement (r) de l'asservissement du capteur d'angle.

2. Procédé selon la revendication 1, caractérisé par un estimateur de cible (Ze), un estimateur d'asservissement (Se) et un régulateur d'état (R) qui traitent les signaux du capteur d'angle et les signaux du capteur de distance ainsi que les signaux d'asservissement du capteur d'angle pour donner un signal de positionnement (r) pour commander de la même manière l'asservissement du capteur d'angel (Ss) et l'estimateur d'asservissement (Se) et en ce que dans l'estimateur d'asservissement (Se), partant du signal de codeur de l'asservissement du capteur d'angle (Ss) on fait une évaluation de son état de mouvement qui simule (représente) l'état de mouvement de la ligne de visée commune des capteurs, et en ce que dans l'estimateur de cible (Ze), à partir du signal de codeur et des signaux des capteurs d'angle ainsi que des signaux des capteurs de distance forment une évaluation de l'état de mouvement angulaire de la cible et dans le régulateur d'état (R) on génère le signal de régulation pour que les deux évaluations d'état soient aussi identiques que possible et le restent.

3. Procédé selon la revendication 1 ou 2, caractérisé en ce qu'à partir de l'estimateur de cible (Ze) on effectue des évaluations de l'état de mouvement de la distance de la cible pour l'appliquer au capteur de distance (D).

4. Procédé selon l'une des revendications 1, 2 ou 3, caractérisé en ce que dans l'estimateur de cible (Ze) et dans l'estimateur d'asservissement (Se) on forme les variances des erreurs d'évaluation (Vz, Vs) et on applique celles-ci au régulateur d'état (R).

5. Procédé selon l'une des revendications 1, 2, 3 ou 4, caractérisé en ce que les signaux du capteur d'angle sont appliqués non seulement à l'estimateur de cible (Ze) mais également à la fois à l'estimateur d'asservissement (Se) et à l'asservissement du capteur d'angle (Ss).

6. Dispositif pour la mise en oeuvre du procédé selon la revendication 1, comportant au moins un capteur de distance (D) et au moins un capteur d'angle (W) ainsi qu'au moins un asservissement de capteur d'angle (Ss) à deux axes de rotation pour aligner en permanence les lignes de visée des capteurs (D, W) parallèles à la ligne de visée commune sur la cible, procédé caractérisé en ce que l'asservissement de capteur d'angle (Ss) est relié à un réseau d'estimateurs d'asservissement (Se) dont la sortie (es) est reliée à une entrée d'un réseau de régulation (R) et en ce que le ou les capteurs de distance (D) et le ou les capteurs d'angle (W) et l'asservissement de capteur d'angle (Ss) sont reliés à un réseau estimateur de cible (Ze) dont la sortie (es) est reliée à l'autre entrée du réseau de régulation (R) et en ce que la sortie du réseau de régulation (R) est reliée à une entrée de régulateur de l'asservissement de capteur d'angle (Ss) et à une entrée du réseau de l'estimateur d'asservissement (Se).

7. Dispositif selon la revendication 6, caractérisé en ce qu'il comporte un estimateur de cible (Ze) et un estimateur d'asservissement (Se) ainsi qu'un régulateur d'état (R) qui traite les signaux (a1, a2, d1, c) des capteurs d'angle (W1, W2), du capteur de distance (D1) et des asservissements de capteur d'angle (Ss) pour former un signal de positionnement (r) et l'asservissement du capteur d'angle (Ss) et l'estimateur d'asservissement (Se) comportent des entrées pour l'application de signaux correspondant aux valeurs du signal de positionnement (r) et en ce que la sortie de l'asservissement de capteur d'angle (Ss) est appliquée à une entrée de l'estimateur d'asservissement (Se), pour transmettre le signal de codeur (c) et en ce que des moyens sont prévus pour transmettre les signaux de capteurs d'angle (a1, a2), les signaux de distance (d1) et le signal de codeur (c) à l'estimateur de cible (Ze) et en ce que les sorties des deux estimateurs (Ze, Se) sont appliquées aux entrées du régulateur d'état (R) pour transférer des signaux ayant la valeur des évaluations d'état (ez, es) à un signal de positionnement (r).

8. Dispositif selon la revendication 6 ou 7, caractérisé en ce que l'estimateur de cible (Ze) est relié au capteur de distance (D1) pour transmettre des signaux ayant la valeur des évaluations (e1) de l'état de mouvement de distance de la cible.

9. Dispositif selon l'une des revendications 6, 7 ou 8, caractérisé par des moyens pour transmettre des signaux ayant la valeur des variances des erreurs d'évaluation (Vz, Vs) de l'estimateur d'état (Ze) et de l'estimateur d'asservissement (Se) vers le régulateur d'état (R).

10. Dispositif selon l'une des revendications 6, 7, 8 ou 9, caractérisé en ce que des capteurs d'angle (W1, W2) sont également reliés à l'estimateur d'asservissement (Se) et à l'asservissement du capteur d'angle (Ss) pour transmettre les signaux de capteur d'angle (a1, a2).

11. Dispositif selon l'une des revendications 6 à 10, caractérisé en ce que les estimateurs (Ze, Se) sont des filtres Kalman-Bucy, étendus.

12. Dispositif selon les revendications 6 à 10, caractérisé en ce que les estimateurs (Ze, Se) sont des filtres Kalman étendus.

13. Dispositif selon les revendications 6 à 10, caractérisé en ce que les estimateurs (Ze, Se) sont des filtres Bucy, étendus.

FIG. 1

FIG. 2